(19) **Europäisches Patentamt / European Patent Office / Office européen des brevets**

(11) **EP 3 501 821 B1**

(12) **EUROPEAN PATENT SPECIFICATION**

(45) Date of publication and mention
of the grant of the patent:
**03.03.2021   Bulletin 2021/09**

(51) Int Cl.:
**B32B 27/08** *(2006.01)*   **B32B 27/30** *(2006.01)*
**B32B 27/32** *(2006.01)*

(21) Application number: **17397533.5**

(22) Date of filing: **20.12.2017**

(54) **A SHRINK LABEL**

SCHRUMPFETIKETT

ÉTIQUETTE RÉTRACTABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.06.2019   Bulletin 2019/26**

(73) Proprietor: **UPM Raflatac Oy**
**33310 Tampere (FI)**

(72) Inventors:
• **Majewska, Klaudia**
 **55-040 Bielany Wroclawskie (PL)**

• **Saxberg, Tom**
 **33230 Tampere (FI)**

(74) Representative: **Berggren Oy, Tampere**
 **Visiokatu 1**
 **33720 Tampere (FI)**

(56) References cited:
 **EP-A1- 3 184 298**   **WO-A1-2016/102779**
 **US-A1- 2007 098 933**   **US-A1- 2017 223 879**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical field

The application concerns a heat shrink film and shrink labels produced thereof.

Background

It is general practice to apply a label to a surface of an item to provide decoration, and/or to display information about the product, such as the content of the item, a trade name or logo. Shrink film labelling is one of the growing labelling techniques. It is especially used for top to bottom and all around labelling. Shrink film labels may be used in wide variety of labelling applications and end-use areas. For example in beverage labelling, food labelling, home and personal care product labelling, and labelling of industrial products. Shrink film labelling suits for almost any shape of the item to be labelled. Shrink film labels are able to adapt to shape of the item when exposed to external energy, such as heat.

WO2016/102779 concerns a shrink face film of a label. The shrink face film is capable to shrink under exposure to external energy and a shrink label produced thereof. The shrink face film comprises a first skin layer, a second skin layer and a core layer in between the skin layers.

Summary

It is an aim to provide a shrink film label suitable for high quality labelling of an item. There is a need for polyolefin based multilayer shrink film labels which have good layer to layer adhesion, improved mechanical properties and printability.

A shrink label capable to shrink under exposure to heat, wherein the shrink label comprises a multilayer shrink film being an oriented and non-annealed film and including layers in the following order: a first skin layer, a core layer and a second skin layer, and wherein the first skin layer comprises: between 20 and 60 wt.% of random copolymer of propylene and ethylene, between 20 and 60 wt.% of at least one of the following propylene terpolymers: 1 -butene/propylene/ethylene, propylene/ethylene/1 -hexene and propylene/ethylene/1-butene, and between 2 and 30 wt.% of polyolefin plastomer and/or elastomer.

A shrink label may be used for labelling of an article so as to provide labelled article.

Further embodiments are presented in the dependent claims.

In an example, the polyolefin plastomer and/or elastomer comprises at least one of the following: propylene-ethylene elastomer, ethylene-octene elastomer, ethylene-butene elastomer, propylene-ethylene plastomer, ethylene-butene plastomer, ethylene-hexene plastomer and ethylene-octene plastomer.

In an example, the polyolefin plastomer and/or elastomer comprises at least one of the following propylene plastomer and propylene elastomer having skewness index above -1.20, molecular weight distribution between 2 and 3, and glass transition temperature between -15 to -35 °C.

In an example, the first skin layer further comprises between 2 and 10 wt.% of cyclic olefin copolymer(s).

In an example, the cyclic olefin copolymer comprises ethylene and cyclic monomers or norbornene and/or tetracyclododecene.

In an example, the core layer comprises copolymer of ethylene and butyl acrylate between 2 and 25 wt.% and at least 70 wt.% of random copolymer of propylene and ethylene.

In an example, the core layer further comprises at least one of the following polyolefin elastomer(s), polyolefin plastomer(s) and terpolymer(s).

In an example, the second skin layer comprises between 95 and 99 wt.% of random copolymer of propylene and ethylene.

In an example, the shrink label comprises the layers in the following order from top to bottom: the first skin layer, the core layer and the second skin layer, and wherein the second skin layer is arranged to be towards the item to be labelled.

In an example, the shrink label comprises the layers in the following order from top to bottom: the second skin layer, the core layer and the first skin layer, and wherein the first skin layer is arranged to be towards the item to be labelled.

Brief description of the drawings

In the following some examples and embodiments of the invention will be described in more detail with reference to appended drawings, in which,

Fig. 1        shows, in a perspective view, an example of a shrink film shrinking under exposure to heat,

Fig. 2        shows an example of a multilayer shrink film,

Fig. 3a       shows an example of a shrink label,

Fig. 3b       shows an example of a labelled article.

Detailed description

In this description and claims, the percentage values relating to an amount of raw materials are percentages by weight (wt.%) unless otherwise indicated. Word "comprising" may be used as an open term, but it also comprises the closed term "consisting of". Unit of thickness expressed as microns corresponds to $\mu$m. Unit of temperature expressed as degrees C corresponds to °C. The following reference numbers and denotations are used in this application:

Sx, Sy, Sz 3D    coordinates,
TD               transverse direction,
MD               machine direction,
DR               draw ratio (stretching ratio)
MRK1             graphics (printing, print layer),
L1               length of a label film prior to shrinking,
L2               length of a shrunk label film,

1     a shrinkable film,
10    a shrunk film,
11    a shrink label
20    an article,
22    a labelled article,
2     a first skin layer,
4     a core layer,
6     a second skin layer,

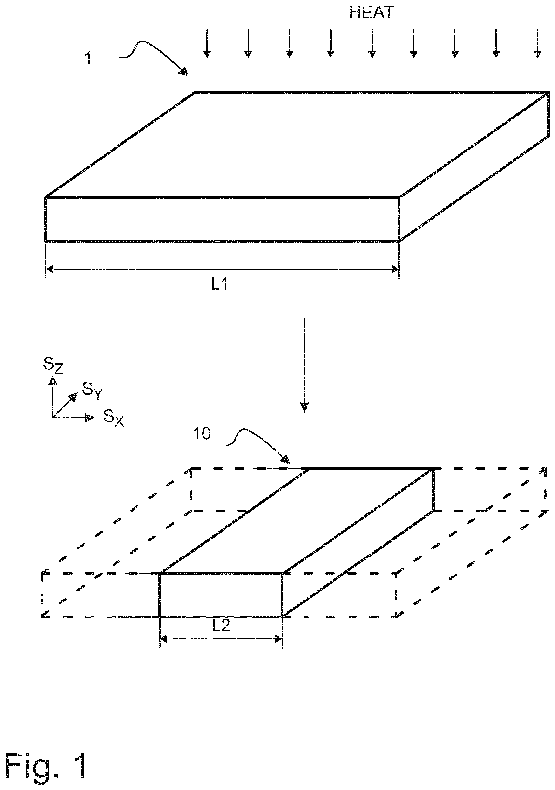

Term "shrinkable" refers to a property of a film or a label made thereof to shrink under exposure to external energy. Referring to Fig. 1, a shrinkable film 1, also referred to as a shrink film, shrinks when exposed to an elevated temperature. Heat may be applied via hot air. Alternatively, heat may be applied via infrared radiation (IR) or steam. In response to application of heat, the film or a label comprising said film is arranged to shrink. Due to the shrinkage an original length L1 of the film is reduced so as to have diminished length L2. The shrinkable film is able to shrink in the stretching (orientation) direction of the film. Shrinkage may be focused on a local area or to the whole film/label area. Due to the shrinking effect and ability to adapt the shape of the labelled item, in addition to carrying printed information, the shrunk label may also provide certain amount of additional structural support to the labelled items, for example, to a thin walled plastic bottle. Further, the label material may provide certain tactile feeling for the end user in addition to the purely visual effects.

In the present application "heat shrink film" or "heat shrink label" refers to a film or label having between 10 and 40 % shrinkage at temperature between 65 and 130°C. Shrinking of the film is preferably provided via dry heating. In addition moisture may be used to enhance the heat transfer. Below 65°C shrinkage is less than 10%. In an example, below 50 °C shrinkage is less than 5%. For example, shrinkage may between 0 and 10%, or between 1 and 5% below 65°C.

A heat shrink label may be a heat shrink sleeve label (HSS) or a roll-fed shrink film label (RFS). A heat shrink film without additional graphics, such as printing, may be used, for example, as a shrinking seal label, a tamper evident label or security label.

Term "printable" refers to a surface, that is suitable for printing. Printable surface is also able to maintain the printing, such as printed text and/or graphics. For printability the film surface needs to have sufficiently high surface energy level determining the wetting characteristics of the surface. A low surface energy level may lead to poor retaining capability of printing ink applied to the surface. Surface energy cannot be measured directly. The surface energy level can be deduced by measuring substitute property of wetting tension, which involves observation of the behaviour of liquids placed on the film surface e.g. according to the standard ASTM D-2578. Wetting tension is the maximum liquid surface tension that will spread on the film surface. Thus, the wetting tension is a measurable property estimating the surface energy of the film. Surface tension may also be measured according to FINAT test method no. 15, wherein the surface tension is measured by applying to the surface of the face material a test fluid of known surface tension (mN/m).

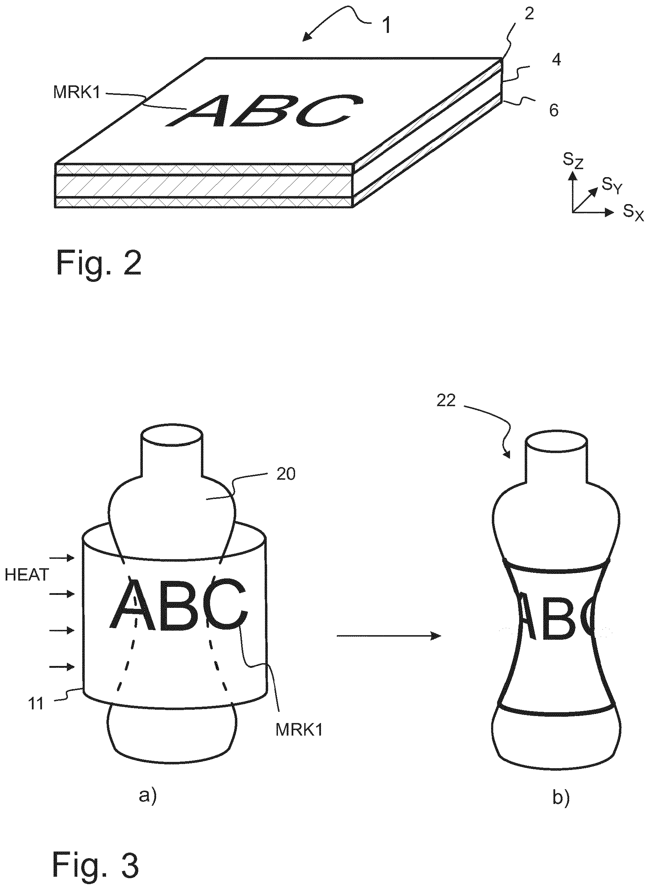

Term "machine direction" MD refers to the running direction $S_x$ of the film or continuous label web during manufacturing. "Transverse direction" TD or "cross direction" CD refers to the direction $S_y$ perpendicular to the running direction $S_x$ of the film or label web. Directions are shown, for example, in Fig. 2.

Overlying/underlying refers to an arrangement of a layer in relation to another layer. Overlaying/underlying refers to an arrangement, where a layer partially or completely overlies/underlies another layer. The overlying/underlying layers are not necessarily in contact with each other, but one or more additional layers may be arranged between the overlying layers.

When referring to layers in a multilayer film, term adjacent refers to an arrangement, where a layer is next to another layer within the multilayer film. Adjacent layers are in contact with each other and no additional layers are between the layers.

Topmost (outermost, uppermost, upmost) layer refers to a configuration of a label structure, where the topmost layer forms upper part of the label structure arranged opposite to the layer attaching the surface of an item when labelled. Topmost layer of a label may be, for example, a first skin layer, a print layer, a top coating (over-vanishing layer).

Undermost layer refers to a layer forming bottom part of the label structure arranged opposite to the topmost layer. Undermost layer is in contact with the surface of an labelled article when the label is arranged onto the article. In a shrink label the undermost and topmost layers of the label structure may contact each other in a seam area where the edges of the film are overlapping when the label is formed into a closed loop around the article. In an example, in the seam area the edges of the film are overlapping over a short distance with each other and the first skin layer of the first edge and the second skin layer of the second edge are adjacent to each other. Seam is formed when the adjacent layers are bonded together. Undermost layer of a label may be, for example a second skin layer, a print layer, a top coating (over-vanishing layer).

SHRINK LABEL STRUCTURE

A shrink label comprises or consists of an oriented and non-annealed film, which is therefore shrinkable and referred to as a shrink film. The film may be drawn (stretched) in one direction. The film may be stretched in a machine direction. Alternatively, the film may be stretched in a transverse direction. The resulting film is thus monoaxially (uniaxially) oriented (MO). Monoaxially oriented film may be machine oriented (MDO) or transverse oriented (TDO) in accordance to the direction of the orientation (stretching). The oriented film is suitable for shrinking along the direction of orientation, during exposure to external energy. Preferably, uniaxially oriented film has shrinking less than 10% or less than 5% in other directions (non-shrinking directions) of the film, during exposure to external energy. Expansion of the uniaxially oriented film is less than 5% in other directions (non-shrinking directions) of the film. Such a non-annealed film has not been specifically temperature treated to become a dimensionally stable, non-shrinking film.

According to an embodiment, a shrink film has a structure comprising multiple layers. With reference to Fig. 2, a shrink film 1 may have a three layer structure comprising a first skin layer 2, a core layer 4 and a second skin layer 6. The above presented order of the layers is from top to bottom of the multilayer structure. Alternatively a multilayer shrink film may comprise five or more layers. Multilayer film structure comprises at least two outer skin layers. A first skin layer may be a topmost layer of the shrink label structure. A second skin layer may be an undermost layer of the shrink label structure. Alternatively, a first skin layer may be undermost layer of the shrink label.

Accordingly, a second skin layer may be topmost layer of the shrink label structure.

According to an example, the shrink label has a multilayer structure comprising layers in the following order: a first skin layer, a core layer and a second skin layer, wherein the second skin layer is arranged to be towards the item to be labelled. Preferably, the first skin layer comprises printing. The printed first skin layer may further comprise over coating so as to protect the printing.

According to an example, the shrink label has a multilayer structure comprising layers in the following order: a second skin layer, a core layer and a first skin layer, wherein the first skin layer is arranged to be towards the item to be labelled. Preferably, the first skin layer comprises printing. In other words, the shrink label is reverse printed. Due to the reverse printing further over coating layers so as to protect the printing may be avoided.

A shrink film and a label produced thereof comprises at least one printable skin layer. In a label structure at least one of the first skin layer and the second skin layer includes printing MRK1. Preferably, the first skin layer is printable. The skin layer comprising printing may be over-coated, for example over-vanished in order to protect the printed graphics.

A core layer 4 may form major portion of a multilayer film structure. The core layer may be thicker than a first skin layer and a second skin layer. For example, the core may form 60 %, 70%, 80% or 90% of the total thickness of the multilayer structure. In an example, a three layer film has a construction 20%/60%/20% for first skin/core/second skin, respectively. In an example, a three layer film has a construction 15%/70%/15% for first skin/core/second skin, respectively. In an example, a three layer film has a construction 10%/80%/10% for first skin/core/second skin, respectively. Alternatively, the core may have thickness of 40 % of the total thickness of the multilayer film. In a three layer symmetric film, the core layer having thickness of 40 % of the total thickness of the film still forms major portion of the film, since the skin surfaces may have thickness of up to 30 % of the label thickness each. Thickness of the core layer may be from 15 to 50 microns, or from 20 to 50 microns, preferably around 45 or 30 microns. Thickness of the skin layers may be 20 % of the total thickness of the multilayer structure. Alternatively, thickness of the skin layers may be 40 % of the total thickness. A thickness of a skin layer may be less than 20 microns, preferably around 10 or 7.5 microns or less. An overall thickness of a multilayer film may be from 20 to 70 microns or from 25 to 60 microns, preferably around 50 microns, around 40 microns, or around 30 microns or less, for example 20 microns.

Preferably a multilayer film has uniform overall thickness. Uniform thickness refers to a homogeneous thickness of the film, wherein a thickness variation along the film is small. For example in a film area of 100mm*100mm variation of the film thickness is less than $\pm 10\%$, preferably between $\pm 0.1$ and $\pm 5.0\%$. Uniform thickness of the film provides better quality labels, for example, labels having good visual appearance. Uniform film thickness may have effect on the register control and image quality of the printing.

According to an embodiment, a shrink label is a heat shrink sleeve label (HSS).

According to another embodiment, a shrink label is a roll-fed shrink film label (RFS).

An example, of a shrink label 11 around an article 20 prior to exposure to external energy, such as heat, is show in Fig. 3 a). In Fig. 3b), a labelled article comprising the label shrunk on the surface of the item is shown.

LAYER COMPOSITIONS

According to an embodiment a multilayer shrink film for shrink label comprises or consist of layers having different compositions. For example, skin layer(s) have different composition when compared to the composition of the core layer. Also first and second skin layers may have different compositions.

First skin layer

According to an embodiment, a first skin layer comprises propylene terpolymer (TP). A terpolymer of propylene refers to a copolymer comprising three distinct monomers, of which one is propylene. A propylene terpolymer may contain at least 65 mol-% of propylene monomer units. In addition to propylene the terpolymer includes two other monomers of alpha-olefin. Other monomers may be for example ethylene, 1-butene, 1-hexene or 1-octene.

Propylene terpolymer may be one of the following: 1-butene/propylene/ethylene, propylene/ethylene/1-hexene and propylene/ethylene/1-butene. 1-butene/propylene/ethylene terpolymer comprises more 1-butene monomer units when compared to the propylene/ethylene/1-butene. An amount of propylene terpolymer(s) may be between 20 and 60 wt.%, preferably between 40 and 60%, more preferably between 40 and 55 wt.%. The amount of terpolymer(s) being between 20 and 60 wt.% may have effect on providing low haze but also high gloss. Haze may be less than 5%, when measured according to the standard ASTM D1003. Gloss (20°) may be above 70%, when measured according to DIN 67530.

Propylene terpolymer(s) may have density 0.88-0.93 g/cm$^3$, when measured according to standard ISO 1183. Melt flow rate may be between 0.9 and 10 g/10min, when measured according to standard ISO 1133 at 230 degrees C/2.16 kg. Melting temperature may be between 120 and 140 degrees C, when measured according to ISO 11357-3. Vicat softening temperature A/50 measured according to ISO 306 may be between 100 and 120 degrees C.

In addition, the first skin layer comprises random copolymer of propylene (RPP). In addition to propylene monomers the copolymer includes monomers of ethylene. Thus, the copolymer may be referred to as a random propylene-ethylene copolymer. In the random copolymer the monomer units of propylene and ethylene are arranged randomly along the polymer chain. An amount of random copolymer of propylene may be between 20 and 60 wt.%, preferably between 20 and 40%, more preferably between 20 and 30% wt.%.

The amount of random copolymer(s) of propylene being between 20 and 60 wt.% may have effect on providing stiffness for the film. For example film after the orientation in MD has 1% secant modulus above 1300MPa in an orientation direction measured according to ISO 527-1,-2. It may also improve thermal properties of the skin layer. It may improve layer to layer adhesion (between 1st skin and the core layer). Good layer to layer adhesion may further have effect on providing low haze.

Random copolymer of propylene may have density from 0.89 to 0.93 g/cm$^3$, when measured according to standard ISO 1183. Melt flow rate may be between 1.5 and 10 g/10min, when measured according to standard ISO 1133 at 230 degrees C/2.16 kg. Melting temperature may be above 135 degrees C (ISO 11357-3). Vicat softening temperature A/50 measured according to ISO 306 may be at least 120 deg C.

In addition, the first skin layer comprises polyolefin plastomer(s) (POP) or polyolefin elastomer(s) (POE) or combination of them.

An amount of polyolefin plastomer(s) and/or polyolefin elastomer(s) may be equal or less than 30 wt.%, or equal or less than 20 wt.%. For example, an amount of polyolefin plastomer(s) and/or polyolefin elastomer(s) may be

5

between 2 and 30 wt.%, preferably between 5 and 20 wt.%. The amount of polyolefin plastomer(s) and/or elastomer(s) being between 2 and 30 wt.% may have effect on increasing the printability. It may also have effect on providing good layer to layer adhesion (first skin layer to core layer).

For example, propylene elastomer(s) and propylene plastomer(s) may be propylene-ethylene copolymers produced with a special catalyst and technology. For example, an olefin plastomer may be propylene-ethylene plastomer. For example, an olefin elastomer may be propylene-ethylene elastomer. A plastomer is a polymer that softens when heated. It hardens when cooled, but remains flexible. An elastomer is elastic polymer resembling natural rubber, returning to its original shape after being stretched or compressed. Due to the catalyst and specific manufacturing technology propylene plastomers and elastomers have unique micromolecular configuration and morphology affecting their properties. In propylene plastomers and elastomers, the co-monomers are arranged in an isotactic fashion. When compared to Ziegler-Natta and metallocene catalysed polypropylenes having skewness index below -1.20, the olefin plastomers

$$S_{ix} = \frac{\sqrt[3]{\sum w_i * (T_i - T_{Max})^3}}{\sqrt{\sum w_i * (T_i - T_{Max})^2}}$$

and elastomer have skewness index above -1.20. Skewness index is defined using equation and temperature rising elution fractionation (TREF) measurement, wherein $T_{max}$ is temperature of the largest weight fraction eluting between 50 and 90 °C in the TREF curve, $T_i$ and $W_i$ are elution temperature and weight fraction respectively of an arbitrary $i$th fraction in the TREF distribution. The skewness reflects the shape of TREF curve of the crystallized polymer. A higher skewness indicates more gradual change in TREF distribution on both the low temperature and on the high temperature side. Propylene plastomers and propylene elastomers have narrow molecular weight distribution (MWD; Mw/Mn) of 2-3, broad crystallinity distribution and wide melt range. Glass transition temperature may be between -15 to -35 °C. Melting range may be 50 to 135 °C. Density may be 0.86 to 0.89 g/cm$^3$. Comonomer content may be 5 to 15 wt%.

The skin layer may comprise at least one or combination of the following polyolefin elastomers: propylene-ethylene elastomer, ethylene-octene elastomer and ethylene-butene elastomer. In addition or instead, the skin layer may comprise at least one or combination of the following polyolefin plastomers: propylene-ethylene plastomer, ethylene-butene plastomer, ethylene-hexene plastomer and ethylene-octene plastomer.

Polyolefin elastomers/plastomers, such as propylene-ethylene elastomer, ethylene-octene elastomer, ethylene-butene elastomer, propylene-ethylene plastomer, ethylene-butene plastomer, ethylene-hexene plastomer and ethylene-octene plastomer, may have density from 0.85 to 0.91 g/cm$^3$. MFR (melt flow rate) may be from 1.0 to 10 g/10min (230 deg C/2,16kg). Peak of melting temperature may be at least 55 degrees C.

Further, the first skin layer may contain additives, such as inorganic fillers, pigments, antioxidants, ultraviolet absorbers, antistatic additives, cavitating agents.

According to another embodiment, the first skin layer further comprises cyclic olefin copolymer. An amount of cyclic olefin copolymer(s) may be equal or less than 15 wt.%, or equal or less than 10 wt.%. An amount of cyclic olefin copolymer(s) may be between 2 and 10 wt.%. Cyclic olefin copolymer (COC) refers to copolymer contains polymerized units derived from at least one cyclic olefin and at least one acyclic olefin. COC may have linear and amorphous structure. COCs may be produced by chain copolymerization of cyclic monomers with ethylene. The cyclic olefin may comprise at least 4 carbon atoms and a unsaturated site for coordinated polymerization with the acyclic olefin. The cyclic olefin may comprise an unsubstituted or substituted ring. The acyclic olefin may be an alpha olefin having two or more carbon atoms. Cyclic olefin copolymers may be based on cyclic monomers, such as norbornene and/or tetracyclododecene. Cyclic monomer(s) may be chain copolymerized with ethene (ethylene). For example, cyclic olefin copolymer may comprise monomers of norbornene and ethene. Norbornene content in COC may be between 60 and 70 wt.%. Alternatively, cyclic olefin copolymer may comprise monomers of tetracyclododecene and ethene. Cyclic olefin copolymer may also consists of monomers of norbornene, tetracyclododecene and ethene. Alternatively, cyclic olefin monomer may be at least one of the following: cyclobutene, cyclopentene, cyclooctene, 5-methylnorbornene, 3-methylnorbornene, ethylnorbornene, phenylnorbomene, dimethylnorbornene, diethylnorbornene, dicyclopentadiene, methyltetracyclododecene, 6-methylnorbornene, 6-ethylnorbornene, 6-n-butylnorbornene, 5-propylnorbornene, 1-methylnorbornene, 7-methylnorbornene, 5,6-dimethylnorbornene, 5-phenylnorbornene, 5-benzyl icnorbornene, 8-methyltetracyclo-3-dodecene, 8-ethyltetracyclo-3-dodecene, 8-hexyltetracyclo-3-dodecene, 2,10-dimethyltetracyclo-3-dodecene and 5,10-dimethyltetracyclo-3-dodecene.

The amount of cyclic olefin copolymer(s) between 2 and 10 wt.% may have effect on providing improved gloss. Due to the COC, gloss may be increased from 75% up to 80%. It may also have effect on enhancing the layer to layer adhesion. In addition it may have effect on boosting the effects of polyolefin elastomers/plastomers. For example, enhance the printability. In an example the surface wetting tension, having effect on printability, may be 40 dynes after 1 month. Greater amounts of COC may have adverse effect such as increased haze and gel content. It may also provide increased shrinkage only in the 1st skin layer providing curling and problems, such as increased gel content e.g. with edge trim recycling during production process.

In an example, the skin layer comprises one type of cyclic olefin copolymer. Alternatively, the skin layer comprises a first cyclic olefin copolymer COC1 and a second cyclic olefin copolymer COC2. The first cyclic olefin copolymer and the second cyclic olefin copolymer exhibit different glass transition temperatures between 30 and 100 °C. The difference between the glass transition temperatures is between 5 and 60 °C. Cyclic olefin copolymers may have effect on clarity of the face film and a label produced thereof.

In an example, COC2 has higher cyclic olefin monomer content (e.g. norbornene content) when compared to COC1. Higher cyclic olefin monomer content may have effect on providing better resistance against solvents. It may further have effect on avoiding whitening of the film during seaming and heat shrinking. It may also have effect on enabling clear and flat seam for heat shrunk films and labels produced thereof. COC1 may have effect on seam forming ability of the film.

In an example, the glass transition temperature of the first cyclic olefin copolymer is below 70°C and the glass transition temperature of the second cyclic olefin is above 70°C. For example, the first cyclic olefin copolymer COC1 may have glass transition temperature of 65°C measured according to standard ISO 11357-1, -2,-3 with heating rate of 10°C/min. The second cyclic olefin copolymer may have a glass transition temperature of 78°C. Melt volume rate tested according to standard ISO 1133 at 230°C with test load of 2.16 kg of COC1 may be 6.0 cm3/10min. Melt volume rate of COC2 may be 11.0 cm3/10 min. Density of COC1 and COC2 may be 1010 kg/m3, when measured according to standard ISO 1183.

According to an example, skin layer comprises cyclic olefin copolymer having density of 980 kg/m$^3$, when measured according to standard ISO 1183. COC may have linear and amorphous structure. Melt volume rate may be 4 cm$^3$/10 min, when measured according to standard ISO 1133 at 230°C with test load of 2.16 kg. Glass transition temperature may be 33 degrees C, when measured according to standard ISO 11357.

According to an example, skin layer(s) comprise cyclic olefin copolymer having density of 1.02 g/cm$^3$, when measured according to standard ASTM D792. Melt volume rate may be 15 g/10 min, when measured according to standard ASTM D1238 at 260°C with test load of 2.16 kg. Glass transition temperature may be 70 degrees C.

According to an example, cyclic olefin copolymer may have melt flow rate 6.0 cm$^3$/10min, when tested according to standard ISO 1133 at 230°C with test load of 2.16 kg. Density may be 1010 kg/m3, when measured according to standard ISO 1183. Glass transition temperature may be 65°C, when measured according to standard ISO 11357-1, -2,-3 with heating rate of 10°C/min.

According to an example, cyclic olefin copolymer may have melt flow rate 12 cm$^3$/10min, when tested according to standard ISO 1133 at 230°C with test load of 2.16 kg. Density may be 1010 kg/m3, when measured according to standard ISO 1183. Glass transition temperature may be 78°C, when measured according to standard ISO 11357-1, -2,-3 with heating rate of 10°C/min.

In an example, an amount of COC1 is between 44 and 77 wt.%, between 50 and 77 wt.%, or between 65 and 75 wt.% of the total amount of cyclic olefin copolymers. In an example, an amount of COC2 is between 10 and 44 wt.%, between 15 and 35 wt.%, or between 15 and 25 wt.% of the total amount of cyclic olefin copolymers. For example, a ratio of the first cyclic olefin copolymer to the second cyclic olefin copolymer COC1/COC2 is between 1 and 8, between 2 and 6, or between 3 and 5. For example, an amount of first cyclic copolymer is between 40 and 80 wt.% and an amount of second cyclic olefin copolymer is between 8 and 35 wt.%.

The first skin layer has effect on printability of the film. For example, the first skin layer may have wetting tension at least 36 dynes/cm, preferably at least 38 dynes/cm, or at least 44 dynes/cm, when measured according to the standard ASTM D-2578. The wetting tension may be between 36 and 60 dynes/cm, preferably between 38 and 56 dynes/cm, or between 44 and 50 dynes/cm. The wetting tension level may also be maintained higher than or equal to 40 dynes/cm after 30 days.

Ink anchorage tests of the first skin layer with different tesa tapes and for a scotch tape provided results above 8 with scale 1(poor) to 10 (very good).

## Examples

Different skin materials were provided and tested for their properties. The test results are provided in the Table 1.
The tested skin layer compositions were as follows:

*1 skin composition* refers to material comprising above 50 wt.% of linear low density polyethylene (LLDPE).
*2.1 skin composition* refers to material comprising less than 30 wt.% of LLDPE, above 50 wt.% of random polypropylene (RPP), between 5 and 15 wt.% of polyolefin elastomer/polyolefin plastomer (POP/POE), and less than 2 wt.% of antioxidant (AO).
*2.2 skin composition* refers to material comprising above 50 wt.% of random polypropylene (RPP), less than 30 wt.% of terpolymer, between 5 and 15 wt.% of polyolefin elastomer/polyolefin plastomer, and less than 2 wt.% of antioxidant.

*3.1 skin composition* refers to material comprising above 50 wt.% of random polypropylene (RPP), between 10 and 20 wt.% of polyolefin elastomer/polyolefin plastomer, less than 50 wt.% of terpolymer, and less than 2 wt.% of antioxidant.

*3.2 skin composition* refers to material comprising less than 45 wt.% of random polypropylene (RPP), between 10 and 20 wt.% of polyolefin elastomer/polyolefin plastomer, above 50 wt.% of terpolymer, and less than 2 wt.% of antioxidant.

*4.1 skin composition* refers to material comprising less than 45 wt.% of random polypropylene (RPP), between 20 and 30 wt.% of polyolefin elastomer/polyolefin plastomer, between 30 and 50 wt.% of terpolymer, and less than 2 wt.% of antioxidant.

*4.2 skin composition* refers to material comprising less than 45 wt.% of random polypropylene (RPP), between 20 and 30 wt.% of polyolefin elastomer/polyolefin plastomer, between 30 and 50 wt.% of terpolymer, between 2 and 10 wt.% of cyclic olefin copolymer (COC) and less than 2 wt.% of antioxidant.

All the samples tested included core layer comprising butyl acrylate less than 25 wt.%, at least 70 wt.% of random copolymer of propylene and ethylene, and 0.5 wt.% of antioxidant.

Thickness refers to total thickness of the films tested.

Layer to layer adhesion was evaluated using scale 0 (poor) to 5 (very good). In the table it is also indicated using DL if delamination and PDL if partial delamination was observed.

Printability was evaluated using scale 1 (poor) to 10 (very good).

The tapes used for the tests have strength from lowest to highest in the following order TESA 4204, TESA 4104 and silicon. In addition tapes of TESA 4124 and scotch were used. TESA 4124 is stronger than scotch.

Dyne level was measured after 1 week and according to the standard ASTM D-2578.

Haze was measured according to the standard ASTM D1003.

Clarity was measured according to standard ASTM D1746-09.

Gloss (20°) was measured according to standard DIN 67530.

Table 1.

| | 1 skin | 2.1 skin | 2.2 skin | 3.1 skin | 3.2 skin | 4.1 skin | 4.2 skin |
|---|---|---|---|---|---|---|---|
| Thickness (μm) | 40 | 39 | 39 | 43 | 42 | 44 | 42 |
| Layer to layer adhesion | | | | | | | |
| TESA 4204 | 1 (DL) | | | | 4 | | |
| TESA 4104 | | | | (PDL) | | | |
| Silicon tape | | | | | | 5 | 5 |
| TESA 4124 | | 3 (PDL) | 5 | | | | |
| Scotch | | 4 | 5 | | | | |
| Printability 5g | | | | | | | |
| Silicon tape | | | | 10 | 8 | 10 | 10 |
| Scotch | | | | 10 | 10 | 10 | 10 |
| TESA 4204 | | | | 10 | 9.5 | 10 | 10 |
| TESA 4104 | | | | 9 | 9.5 | 9.5 | 10 |
| Dyne level (dynes) | 34-36 | 44 | 44 | 41 | 40 | 45 | 45 |
| Haze (%) | | | | | | | |
| before shrink | 3 | | | 4 | 3 | 2.5 | 2.5 |
| after shrink | 8 | | | 6 | 5 | 3 | 3 |
| Clarity (%) | | | | | | | |
| before shrink | | | | 91 | 96 | 98 | 98 |
| after shrink | | | | | | 98 | 98 |

(continued)

| Printability 5g | | | | | | | |
|---|---|---|---|---|---|---|---|
| Gloss 20° (%) | 60 | | | 50 | 60 | 75 | 80 |

It was measured that the layer to layer adhesion of 1 skin composition was very poor and the layers were laminated even without using any tape. With 2.1. skin composition the layer to layer adhesion was observed to be partial and with 2.2 skin composition to be good. With 3.1. and 3.2 skin compositions the adhesion was observed to be partial and with 4.1. and 4.2 compositions very good.

Based on the results it is noticed that the decreased amount of RPP (less than 60 wt.%) together with specific amounts of terpolymer (20-60 wt.%) and elastomers/plastomers (5-30 wt.%) have positive effect on the layer to layer adhesion.

Regarding printability it is noticed that the decreased amount of RPP (less than 60%) together with specific amount of terpolymer (20-60%) and elastomers/plastomers (5-30%) has positive effect on printability. In general, optical properties were observed to be improved by increased amount of terpolymer. However, too high amount of terpolymer may result in partial layer to layer adhesion. Addition of COC was observed to have positive effect on gloss. Further, addition of elastomers/plastomers was observed to have positive effect on haze before and after shrinkage.

Core layer

According to an embodiment a core layer comprises copolymer of ethylene and butyl acrylate (EBA). An amount of copolymer of ethylene and butyl acrylate may be between 2 and 25 wt.%, preferably between 5 and 15%. The amount of EBA between 2 and 25 wt.% may have effect on providing enhanced stretchability in lower stretching temperatures. It may also have effect on shrinkability without adversely affecting the stiffness.

In addition the core layer may comprise random propylene copolymer (RPP). In addition to propylene monomers the copolymer includes monomers of ethylene. The monomers are randomly dispersed along the polymer chain. Thus, the copolymer may be referred to as a random propylene/ethylene copolymer. An amount of random propylene copolymer(s) may be between 70 and 90 wt.%. The amount of RPP between 70 and 90 wt.% may have effect on providing high modulus and thus suitable stiffness. Mechanical properties are required for application and seaming of the shrink label. An amount of RPP at least 70 wt.% may also have effect to layer to layer adhesion. In addition it may have effect on thermal properties of the film. Thermal properties include softening and melting. RPP may also have effect on shrink behaviour (shrink curve) of the shrink label when exposed to external energy.

Random copolymer of propylene may have density from 0.89 to 0.93 g/cm$^3$, when measured according to standard ISO 1183. Melt flow rate may be between 1.5 and 9.0 g/10min, when measured according to standard ISO 1133 at 230 degrees C/2.16 kg. Melting temperature may be above 135 degrees C (ISO 11357-3). Vicat softening temperature A/50 measured according to ISO 306 may be at least 130deg C. Heat deflection temperature B (0.45 MPa) measured according to ISO 75B -1,-2 may be between 60 and 85 degrees C, preferable between 70 and 80 degrees C.

According to an embodiment, the core layer may further comprise other polyolefin based resin(s). For example, polyolefin plastomers/elastomers, terpolymers. In an example, the core layer may comprise up to 10 wt.% of terpolymer(s) and/or up to 10 wt.% of elastomers/plastomers. These may have effect on improving the shrinkability. The polyolefin based resins may also have boosting effect on the layer to layer adhesion.

The core layer may also comprise additives, such as antioxidant(s).

The core layer has effect on providing primary properties for the multilayer film. The core mainly affects the thermal, mechanical and shrink properties of the multilayer film.

Second skin layer

In an example a second skin layer comprises random copolymer of propylene and ethylene (RPP). An amount for random copolymer of propylene/ethylene may be between 95 and 99 wt.%.

Random copolymer of propylene may have density from 0.89 to 0.93 g/cm$^3$, when measured according to standard ISO 1183. Melt flow rate may be between 1.5 and 9.0 g/10min, when measured according to standard ISO 1133 at 230 degrees C/2.16 kg. Melting temperature may be above 135 degrees C (ISO 11357-3). Vicat softening temperature A/50 measured according to ISO 306 may be at least 130 deg C. Heat deflection temperature B (0.45 MPa) measured according to ISO 75B-1,-2 may be between 60 and 85 degrees C, preferably between 70 and 80 degrees C.

The second skin comprising random copolymer of propylene/ethylene between 95 and 99 wt.% has effect on stiffness. It may further have effect on providing slip, antiblocking and antistatic properties.

In an example, the multilayer shrink film comprising three layer structure including the first skin layer, the core layer and the second skin layer as disclosed above has improved optical properties, such as haze after shrinkage below 5%, when measured according to the standard ASTM D1003, and clarity of 97%. Clarity is measured according to standard ASTM D1746-09.

Further, the multilayer film exhibits 1% secant modulus above 1300 MPa in main orientation direction and at least 800 MPa in a direction perpendicular to the main orientation direction. The 1% secant modulus above 1300 MPa in main orientation direction and at least 800 MPa in a direction perpendicular to the main orientation direction enables shrink film label to be applied and seamed on a container.

Further, the multilayer film exhibits very low (below 10%) shrinkage in temperatures below 100 deg C and high, preferably between 20% and 30%, in temperature between 120 and 130deg C (temperature corresponding to standard hot air shrink tunnel temperatures). Further, the shrinkage of the film is equal or less than 40% in temperature 130deg C, thus avoiding breakages of seam area, such as bursting of the seam area including adhesive, during the shrinkage.

The multilayer shrink film comprising three layer structure and shrink labels produced thereof including the first skin layer, the core layer and the second skin layer as disclosed above, may have effect on providing not only good shrinkability but also good stiffness, clarity, printability and layer to layer adhesion.

**Claims**

1.  A shrink label capable to shrink under exposure to heat, wherein the shrink label comprises a multilayer shrink film being an oriented and non-annealed film and including layers in the following order: a first skin layer, a core layer and a second skin layer, and wherein the first skin layer comprises:

    between 20 and 60 wt.% of random copolymer of propylene and ethylene,
    between 20 and 60 wt.% of at least one of the following propylene terpolymers:

    1-butene/propylene/ethylene, propylene/ethylene/1-hexene and
    propylene/ethylene/1-butene, and between 2 and 30 wt.% of polyolefin plastomer and/or elastomer.

2.  A shrink label according to claim 1, wherein the polyolefin plastomer and/or elastomer comprises at least one of the following: propylene-ethylene elastomer, ethylene-octene elastomer, ethylene-butene elastomer, propylene-ethylene plastomer, ethylene-butene plastomer, ethylene-hexene plastomer and ethylene-octene plastomer.

3.  A shrink label according to claim 1, wherein the polyolefin plastomer and/or elastomer comprises at least one of the following propylene plastomer and propylene elastomer having skewness index above -1.20 and molecular weight distribution between 2 and 3.

4.  A shrink label according to any of the previous claims, wherein the first skin layer further comprises between 2 and 10 wt.% of cyclic olefin copolymer(s).

5.  A shrink label according to claim 4, wherein the cyclic olefin copolymer comprises ethylene and cyclic monomers or norbornene and/or tetracyclododecene.

6.  A shrink label according to any of the previous claims, wherein the core layer comprises copolymer of ethylene and butyl acrylate between 2 and 25 wt.% and at least 70 wt.% of random copolymer of propylene and ethylene.

7.  A shrink label according to claim 6, wherein the core layer further comprises at least one of the following polyolefin elastomer(s), polyolefin plastomer(s) and terpolymer(s).

8.  A shrink label according to any of the previous claims, wherein the second skin layer comprises between 95 and 99 wt.% of random copolymer of propylene and ethylene.

9.  An article comprising a shrink label according to any of the claims 1-8.

10. An article according to claim 9, wherein the second skin layer is arranged to be towards the item to be labelled.

11. An article according to claim 9, wherein the first skin layer is arranged to be towards the item to be labelled.

12. Use of a shrink label according to any of the claims 1-8 for labelling of an article.

**Patentansprüche**

1. Schrumpfetikett, das unter Hitzeeinwirkung schrumpfen kann, wobei das Schrumpfetikett einen mehrschichtigen Schrumpffilm umfasst, der ein orientierter und nicht getemperter Film ist und Schichten in der folgenden Reihenfolge enthält:

   eine erste Hautschicht, eine Kernschicht und eine zweite Hautschicht, wobei die erste Hautschicht Folgendes umfasst:

   zwischen 20 und 60 Gew.-% statistisches Copolymer von Propylen und Ethylen,
   zwischen 20 und 60 Gew.-% mindestens eines der folgenden Propylen-Terpolymere:

   1-Buten/Propylen/Ethylen, Propylen/Ethylen/1-Hexen und
   Propylen/Ethylen/1-Buten und zwischen 2 und 30 Gew.-% Polyolefin-Plastomer und/oder Elastomer.

2. Schrumpfetikett nach Anspruch 1, wobei das Polyolefin-Plastomer und/oder Elastomer mindestens eines der folgenden umfasst: Propylen-Ethylen-Elastomer, Ethylen-Octen-Elastomer, Ethylen-Buten-Elastomer, Propylen-Ethylen-Plastomer, Ethylen-Buten-Plastomer, Ethylen-Hexen-Plastomer und Ethylen-Octen-Plastomer.

3. Schrumpfetikett nach Anspruch 1, wobei das Polyolefin-Plastomer und/oder Elastomer mindestens eines der folgenden Propylenplastomere und Propylenelastomere mit einem Schiefeindex über -1,20 und einer Molekulargewichtsverteilung zwischen 2 und 3 umfasst.

4. Schrumpfetikett nach einem der vorhergehenden Ansprüche, wobei die erste Hautschicht ferner zwischen 2 und 10 Gew.-% cyclisches Olefincopolymer(e) umfasst.

5. Schrumpfetikett nach Anspruch 4,
   wobei das cyclische Olefincopolymer Ethylen und cyclische Monomere oder Norbornen und/oder Tetracyclododecen umfasst.

6. Schrumpfetikett nach einem der vorhergehenden Ansprüche, wobei die Kernschicht ein Copolymer aus Ethylen und Butylacrylat zwischen 2 und 25 Gew.-% und mindestens 70 Gew.-% statistisches Copolymer von Propylen und Ethylen umfasst.

7. Schrumpfetikett nach Anspruch 6, wobei die Kernschicht ferner mindestens eines der folgenden umfasst: Polyolefinelastomer(e), Polyolefinplastomer(e) und Terpolymer(e).

8. Schrumpfetikett nach einem der vorhergehenden Ansprüche, wobei die zweite Hautschicht zwischen 95 und 99 Gew.-% statistisches Copolymer von Propylen und Ethylen umfasst.

9. Artikel mit einem Schrumpfetikett nach einem der Ansprüche 1 bis 8.

10. Artikel nach Anspruch 9, wobei die zweite Hautschicht angeordnet ist, um in Richtung des zu kennzeichnenden Gegenstands zu liegen.

11. Artikel nach Anspruch 9, wobei die erste Hautschicht angeordnet ist, um in Richtung des zu kennzeichnenden Gegenstands zu liegen.

12. Verwendung eines Schrumpfetiketts gemäß einem der Ansprüche 1 bis 8 zur Kennzeichnung eines Artikels.

**Revendications**

1. Etiquette rétractable capable de se rétracter lorsqu'elle est exposée à la chaleur, dans laquelle l'étiquette rétractable comprend un film rétractable multicouche qui est un film orienté et non recuit et comportant des couches dans l'ordre suivant : une première couche de revêtement, une couche centrale et une seconde couche de revêtement, et dans laquelle la première couche de revêtement comprend : entre 20 et 60 % en poids de copolymère aléatoire de propylène et d'éthylène, entre 20 et 60 % en poids d'au moins un des terpolymères de propylène suivants : 1-butène/propylène/éthylène, propylène/éthylène/1-hexène et propylène/éthylène/1-butène, et entre 2 et 30 % en poids de plastomère et/ou d'élastomère de polyoléfine.

2. Etiquette rétractable selon la revendication 1, dans laquelle le plastomère et/ou l'élastomère de polyoléfine comprennent au moins l'un des éléments suivants : élastomère propylène-éthylène, élastomère éthylène-octène, élastomère éthylène-butène, plastomère propylène-éthylène, plastomère éthylène-butène, plastomère éthylène-hexène et plastomère éthylène-octène.

3. Etiquette rétractable selon la revendication 1, dans laquelle le plastomère et/ou l'élastomère de polyoléfine comprennent au moins l'un des plastomère de propylène et élastomère de propylène suivants ayant un indice d'asymétrie supérieur à -1,20 et une distribution de poids moléculaire entre 2 et 3.

4. Etiquette rétractable selon l'une quelconque des revendications précédentes, dans laquelle la première couche de revêtement comprend en outre entre 2 et 10 % en poids de copolymère(s) d'oléfine cyclique.

5. Etiquette rétractable selon la revendication 4, dans lequel le copolymère d'oléfine cyclique comprend de l'éthylène et des monomères cycliques ou du norbornène et/ou du tétracyclododécène.

6. Etiquette rétractable selon l'une quelconque des revendications précédentes, dans laquelle la couche centrale comprend un copolymère d'éthylène et d'acrylate de butyle entre 2 et 25 % en poids et au moins 70 % en poids de copolymère aléatoire de propylène et d'éthylène.

7. Etiquette rétractable selon la revendication 6, dans laquelle la couche centrale comprend en outre au moins l'un du/des élastomère(s) de polyoléfine, plastomère(s) de polyoléfine et terpolymère(s) suivants.

8. Etiquette rétractable selon l'une quelconque des revendications précédentes, dans laquelle la seconde couche de revêtement comprend entre 95 et 99 % en poids de copolymère aléatoire de propylène et d'éthylène.

9. Article comprenant une étiquette rétractable selon l'une quelconque des revendications 1 à 8.

10. Article selon la revendication 9, dans lequel la seconde couche de revêtement est agencée de manière à être tournée vers l'article à étiqueter.

11. Article selon la revendication 9, dans lequel la première couche de revêtement est agencée de manière à être tournée vers l'article à étiqueter.

12. Utilisation d'une étiquette rétractable selon l'une quelconque des revendications 1 à 8 pour l'étiquetage d'un article.

HEAT

1

L1

$S_Z$
$S_Y$
$S_X$

10

L2

# Fig. 1

Fig. 2

a)

b)

Fig. 3

**EP 3 501 821 B1**

**Patent documents cited in the description**

- WO 2016102779 A